(19) 

Europäisches
Patentamt
European
Patent Office
Office européen
des brevets

(11) **EP 2 396 892 B1**

(12) **EUROPEAN PATENT SPECIFICATION**

(45) Date of publication and mention
of the grant of the patent:
**09.11.2016 Bulletin 2016/45**

(51) Int Cl.:
*H04B 1/707* (2006.01)   *H04L 27/26* (2006.01)
*H04B 1/7107* (2011.01)   *H04J 11/00* (2006.01)

(21) Application number: **09839921.5**

(86) International application number:
**PCT/FI2009/050120**

(22) Date of filing: **16.02.2009**

(87) International publication number:
**WO 2010/092225 (19.08.2010 Gazette 2010/33)**

(54) **A METHOD AND AN APPARATUS FOR FORMING SIGNAL ESTIMATES**

VERFAHREN UND VORRICHTUNG ZUR BILDUNG VON SIGNALSCHÄTZUNGEN

PROCÉDÉ ET APPAREIL PERMETTANT DE RÉALISER DES ESTIMATIONS DE SIGNAL

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**21.12.2011 Bulletin 2011/51**

(73) Proprietor: **Keysight Technologies Singapore
(Holdings)
Pte. Ltd.
Singapore 228095 (SG)**

(72) Inventors:
• **NUUTINEN, Jukka-Pekka
FI-90850 Martinniemi (FI)**
• **PYY, Marko
FI-92140 Pattijoki (FI)**
• **TAPANINAHO, Marko
FI-90450 Kempele (FI)**

(74) Representative: **Hill, Justin John et al
Olswang LLP
90 High Holborn
London WC1V 6XX (GB)**

(56) References cited:
EP-A2- 1 753 151          WO-A1-01/13532
WO-A1-2007/074215     US-A1- 2003 174 794
US-A1- 2006 217 080     US-B1- 6 574 204
US-B1- 6 574 204

• **DONGNING GUO ET AL: "A Matrix-Algebraic
Approach to Linear Parallel Interference
Cancellation in CDMA", IEEE TRANSACTIONS
ON COMMUNICATIONS, IEEE SERVICE CENTER,
PISCATAWAY, NJ. USA, vol. 48, no. 1, 1 January
2000 (2000-01-01), XP011009578, ISSN:
0090-6778**
• **RASMUSSEN, L. K. ET AL.: 'A matrix-algebraic
approach to successive interference cancellation
in CDMA' IEEE TRANSACTIONS IN
COMMUNICATIONS vol. 48, no. 1, January 2000,
pages 145 - 151, XP000912973**
• **GUO, D. ET AL.: 'A matrix-algebraic approach to
linear parallel interference cancellation in CDMA'
IEEE TRANSACTIONS IN COMMUNICATIONS
vol. 48, no. 1, January 2000, pages 152 - 161,
XP011009578**

EP 2 396 892 B1

## Description

FIELD OF THE INVENTION

The present invention relates to communications technology, and more particularly to processes for iteratively forming signal and interference estimates from received data samples.

BACKGROUND OF THE INVENTION

In a communications channel, there exist different disturbances like interference. Because interference reduces the quality of the channel and a communication, methods for reducing the interference have been developed. In order to be able to reduce the interference, characteristics of the communication channel and the interference must be known.
A conventional way to simulate the interference is to formulate the interference by a synthetic interference source. In it dummy data is created, which is then modulated and added to the signal. This data is not based on any measurements or real situations detected in a field environment, but rather to statistical or theoretical considerations. Thus there exist many problems associated with the conventional arrangements. One of such problems is that the conventional way to simulate the interference requires lots of resources, specially hardware resources, and computing resources, such as FPGA (field programmable gate array) resources. This fact leads to complex, slow and inaccurate emulators of the interference and thus low quality of communications.
The document US 2003/0174794 A1 describes reduced-complexity multipath interference cancellation. In the document the interference duplication is performed in a truncated manner, based on.a determination of which multipath signals are present, so as to reduce the complexity and processing requirement of the interference duplication. Multipath interference in a received wireless signal is then cancelled by generating the estimated duplicate of the interference and subtracting it from the received signal.
The document EP 1 753 151 A2 describes a mobile communication terminal wherein a reduction is made in computational complexity for cancellation of multipath interference. The terminal equipped with a multipath interference canceller includes a number-of-samples controlling means, channel matrix generating means, and interference cancelling means for cancelling multipath interference on the basis of the channel matrix generated by the channel matrix generating means.
The publication US 6574204 describes a method of cancelling interference components included in received signals of base station in mobile communications system, It includes the steos of correlating user data in parallel, comparing the correlated resultant values with one another to decode one correlation value having the maximum value using the user codes and subtracting user data obtained during spreading step from input user data.
The publication "A Matrix-Algebraic Approach to Linear Parallel Interference Cancellation in CDMA" describes that the linear PIC - parallel interference cancellation - can be seen as a linear matrix filter applied directly to the chip-matched filtered received signal vector. It also demonstrates the close relationship between the linear multistage PIC and the steepest descent method SDM.

BRIEF DESCRIPTION OF THE INVENTION

An object of the present invention is thus to provide a method and an apparatus for implementing the method so as to overcome the above problems.
In a first aspect, the present disclosure provides a method for emulation of signals by extracting a signal and an interference from communication measurements, comprising: receiving and storing a communication comprising the signal and the interference; feeding the received communication through a filter for detecting a strongest impulse response peak of a plurality of impulse response peaks corresponding to a plurality of respective paths in the filtered signal or in the filtered interference and for providing the strongest impulse response peak as an output from the filter; feeding the output from the filter to a regenerator for recon-structing a path of the signal or of the interference according to a reconstruc-tion equation using the strongest impulse response peak; feeding an output from the regenerator to a subtractor for obtaining a residual signal component or a residual interference component from the communication; feeding the residual signal component or the residual interference component again through the same filter, the same regenerator, and the same subtractor for obtaining a next residual signal component or a next residual interference component from the communication until a whole signal or a whole interference is reconstructed from the reconstructed paths; and using the reconstructed whole signal and/or the reconstructed whole interference for emulation in a test environment.
In a second aspect, the present disclosure provides a device for emulation of signals by extracting a signal and interference from communication measurements, the device comprising: receiving and storing means configured to receive and store a communication comprising the signal and the interference; a filter for detecting, in the received communication, a strongest impulse response peak of a plurality of im-pulse response peaks corresponding to a plurality of respective paths in the filtered signal or in the filtered interference and providing the strongest impulse response peak as an output from the filter; a regenerator for reconstructing a path of the signal or of the interference according to a reconstruction equation using the strongest impulse response peak output from the filter; a subtractor for obtaining a residual signal component or a residual interference component from the communication using an output from the regenerator; the device being configured to feed the residual signal component or the residual interference component again through the same filter, the same regenerator, and the same subtractor for obtaining a next residual signal component or a next residual interference component from the communication until a whole signal or a whole interference is reconstructed from the reconstructed paths; and the device being configured to use the reconstructed whole signal and/or the reconstructed whole interference for emulation in a test environment.

In a third aspect, the present disclosure provides a non-transitory computer-readable medium comprising instructions encoded thereon that, when executed by a computing device, cause the computing device to perform a method according to the first aspect.

The invention is based on the idea of using a measured interference as a signal. Because in cellular and equivalent networks the most severe interference sources can be known a priori, the matched filters can specially be designed for said sources. The output of the matched filter is an impulse response.

There exist many advantages of the invention and its embodiments. E.g. the interference profile is now based on the measurements and not on the guess such as in prior art synthetic cases, enabling the full realism. Furthermore, the complexity of a test setup becomes less critical than in direct playback modes. An advantage of the method and arrangement of the invention is simpler structure and faster functioning of the emulator. Less hardware resources is needed than in conventional solutions.

BRIEF DESCRIPTION OF THE DRAWINGS

In the following the invention will be described in greater detail by means of preferred embodiments with reference to the attached drawings, in which

Figure 1 is a block diagram of the invention and its embodiments;
Figure 2 is a graph of an incoming signal detected impulse response versus excess delay;
Figure 3 is a graph of the incoming signal detected impulse response versus excess delay;
Figure 4 is a block diagram of the invention and its embodiments;
Figure 5 is a graph of impulse response versus excess delay of an interfering signal; and
Figure 6 is a block diagram of the invention and its embodiments.

DETAILED DESCRIPTION OF THE INVENTION

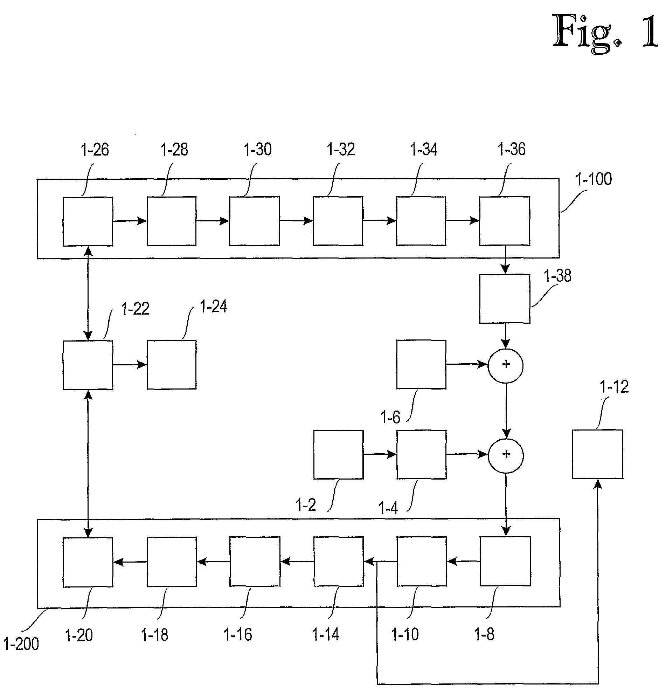

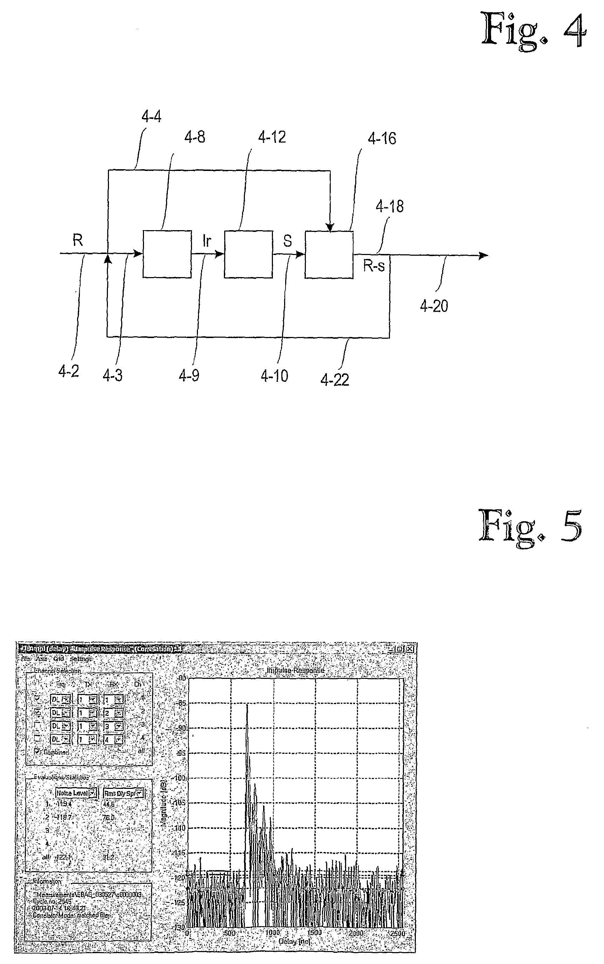

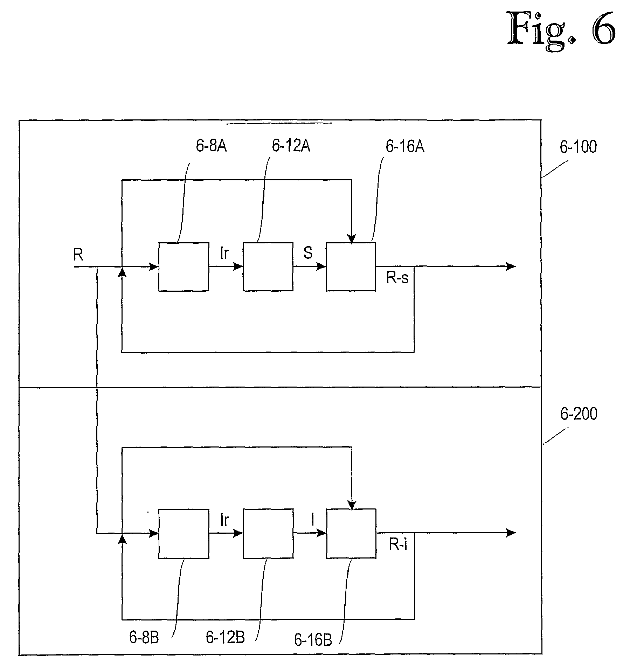

Figure 1 is a block diagram of the invention and its embodiments. In Figure 1 two different lines 1-100, 1-200 can be found: the first one (a receiver end) 1-200 of the elements 1-8, 1-10 and 1-14 to 1-20 and of the second one (a transmitter end) 1-100 of the elements 1-26 to 1-36. Between these two lines some other elements can be found: the elements 1-2 to 1-6, 1-12, 1-22 to 1-24, and 1-38. The interference for the radio channel or the interference that is thought to be on the channel can be generated in an interference generation unit 1-2 e.g. for adding the interference on the channel. The interference can be e.g. noise, impulses, imitation of other signals, and/or other interference, and the interference can be generated e.g. by hardware or the interference can be retrieved from a database or a memory, from stored data. This means that when the signal is captured from the air, the captured data contains signal and the interference. Now this interference is estimated by subtracting the signal from the total received data. This residual signal can then be played back. The signal and/or the noise or interference is modeled to a realistic model for doing play back, which model may then be emulated. This can be done in this phase or in the phase 1-12 (see e.g. Figures 4 and 6 above). This model can be fed to a radio channel unit 1-4. Also noise can be generated and added to the radio channel. For this purpose a noise source 1-6 generates noise. Noise and interference are then added to the radio channel 1-38, after which the radio channel data is forwarded to a cyclic prefix removal element 1-8. This element removes cyclic prefix meaning that during the cyclic prefix the channel is typically estimated. Also, if the delay spread is larger than the cyclic prefix CP, the inter symbol interference ISI is caused. This is important, because above mentioned reasons. The signal forwards to an FFT element 1-10, in which element a discrete Fourier transform is processed to the signal fast and in an efficient way. The transform can be in a form of a fast Fourier transform FFT. After the FFT element an intermediary output can take the signal to a radio channel and interference estimator element 1-12 for estimating or emulating the signal and the interference.

Instead of or in addition to a hard demodulation, the signal can proceed to a soft demodulation block 1-14 after the FFT block for demodulating purposes. In this block a probability value of a codeword of a signal can be calculated and an analog value for the signal can be outputted. Thus e.g. for the signal level 1, a probability value 0,7 or 0,75 or 0.8 or some other value can be obtained and for the signal level -1, a probability value -0,7 or -0,75 or -0,8 can be obtained.

Then, a decoder 1-16, such as a Viterbi decoder, receives the probability of a dataword of the signal from the soft demodulator and decodes the codeword of the signal into the dataword of the signal. The decoder can be e.g, a soft decoder or a turbo decoder. After decoding process a bit estimator 1-18 estimates the values for different bits of the dataword of the signal. The values can be 0, 1; 0, +1, -1; or +1, -1; or some other values. The estimation can be based on e.g. a maximum likelihood method by integrating a received or indicated voltage to the threshold level or from the threshold level.

When the certain voltage, current or other signal level(s) is (are) estimated for the bits, a bit decision block 1-20 can decide what value the bit obtains. The decision(s) can be made partially or completely, and decisions can be soft or hard. Different tables or matrixes can be used for the decision-making process.

Bits from a bit source or a bit source element, from a bit generation or from a bit detection element 1-26 (in the second line 1-100) and from the bit decision element 1-20 (In the first line 1-200) can be compared in a comparator 1-22 for different purposes comprising for communications transmission and/or reception quality purposes. The result(s) of the comparison(s) can be fed to a bit error rate BER counter 1-24 for detecting the number of bit errors and the total number of bits and the ratio thereof. The transmission and reception can be calculated or adapted to a given time interval. The thus obtained value indicates whether there are any bits that are transmitted incorrectly and if yes, how many. The type and length of the transmission or reception can also be taken into account.

From the bit source element 1-26 the signal or part of it can be forwarded to a segmentation element 1-28, to a convolutional encoding element 1-30 and to a modulation element 1-32. In these elements the signal is segmented, collected into one or more segments, encoded and finally modulated by varying at least one of the characteristics of the signal. After these elements a Fourier transform can be processed 1-34 for the signal. The transform can be e.g. in a form of an inverse discrete fast Fourier transform IFFT. A cyclic prefix insertion block 1-36 is used for adding some bits to the data block of the signal and for mitigating the effects of interference, like an intersymbol-interference ISI. After all these elements of the line two, the signal can be fed to the radio channel for possibly inserting noise and interference to the signal, as described above.

It must be noted the some or all of the above-mentioned blocks and elements can be divided into two or more elements and some or all of the elements can also be grouped together or grouped alternatively. Also the number of different lines can be more than two. Alternatively, the whole process can be thought to function as a single line.

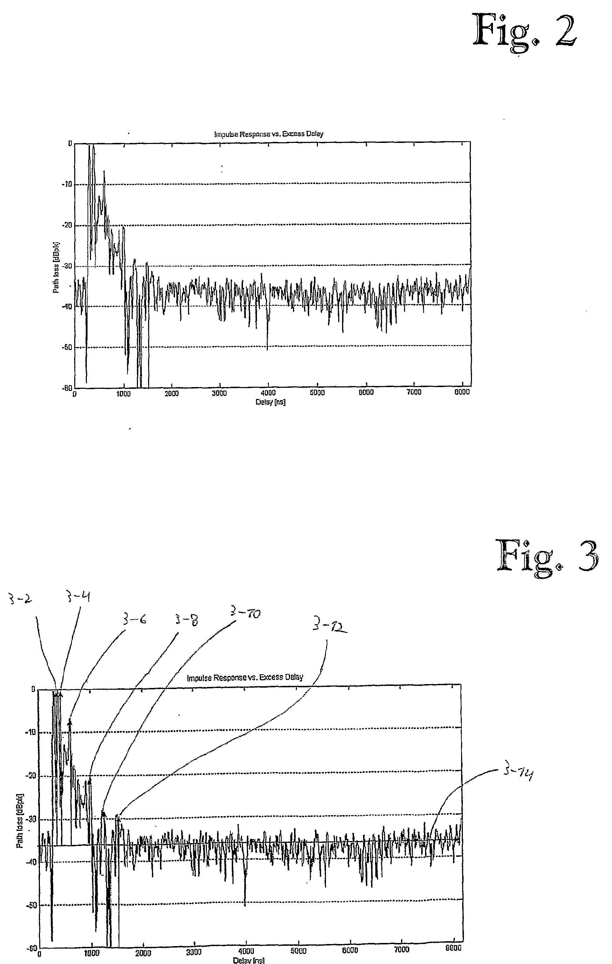

Figure 2 shows as an output of a matched filter the incoming detected impulse response being a graph of impulse response versus excess delay. The delay can be e.g. thousands of nanoseconds, like 1000ns, 2000ns, 3000ns or 4000ns and the path loss mainly between -30 to -40 dBpk (pk = peak). As can be seen, there can exist several strong peaks, signal components, which are available in detection. Therefore a SIC cancellation method, Serial Interference Cancellation, can be applied for detecting the incoming signal. The signal can be in a form of

$$s(t,\tau) = \sum_{i=1}^{N} A_i e^{j2\pi\nu t} u(t-\tau) \qquad (1)$$

where A refers to the amplitude of the signal, the exponent of the equation to the phase of the signal and u to the transmitted signal form. The parameters (A, tau, nu) can be taken from the measured data. In it the strongest peak of impulse response is measured and/or detected and the signal can be reconstructed according the equation (1). This reconstructed signal can then be subtracted from the total signal, giving the residual signal. This residual signal can then be forwarded through one or more matched filters to achieve the new impulse response, from which the second signal component can be estimated by equation (1). This result can then again be subtracted from the first residual signal and so on. Thus with this method the whole incoming signal can be reconstructed with appropriate signal components. This is needed in order to emulate the signal environment, i.e. the radio channel model.

Figure 3 is a graph of the incoming signal. The above-mentioned SIC principle can also be applied with respect to this Figure. Said Figure shows some impulse response peaks 3-2 to 3-12 and a calibrated path loss scale 3-14 (x-axis) of about -37 dBpk (decibel peak) of the impulse response.

The principle of the SIC method is shown in more detailed in Figure 4. The input signal 4-2 from a receiver front end is fed to the matched filter 4-8 for filtering out unwanted signal components or some specific frequency range or unwanted interference or some specific interference range and for passing the wanted signal and/or the wanted interference range. The output of the matched filter 4-9 is fed to the signal regeneration, reconstruction element 4-12 for regenerating, reconstructing the signal e.g. according the equation (1). The output 4-10 of the reconstructed signal is then fed to a subtraction element 4-16 to be subtracted from the signal 4-4 fed directly from the input of the SIC element to the subtraction element. Thus the residual signal 4-18 is the output from the subtraction element. In other words, the input signal "r" is subtracted from the regenerated signal "s" given the output signal as "r-s". This residual signal can then be fed back to the matched filter and forwarded through one or more matched filters to achieve new impulse response(s), from which the second signal component, the third, the fourth etc. signal component(s) can be estimated e.g. by equation (1).

The arrangement and method of the invention and its embodiments shown and described in Figure 4 can also be applied to the interference estimation. In it, the test receiver is sampling the two or more samples of the signal, like I and Q (in-phase and Quadrature signal) samples. The received signal is driven through the interference matched filter to obtain another impulse response. Basically the exactly same methodology as described above also applies to the interference estimation. After the matched filtering, impulse response of the interference is obtained. It must be noted that in Figure 4 the signal component is taken out one by one. This means that in the equation 1 there exists a sum over n paths. Then it is possible to reconstruct every path one by one, and also its corresponding signal component, and also thus subtract them one by one from the total received signal.

In other words, a signal is received from a transmitter or retrieved from a database or a memory. The signal can then be fed to a matched filter, which outputs an impulse response. This response or part of it can be matched to the equation 1 or a corresponding equation. A component from a reconstructed signal can thus be established and obtained. A residual signal is obtained from the total signal from which the reconstructed signal component is subtracted. If more signal components are needed, the thus obtained residual signal can further be fed to one or more matched filters, as described above, to achieve the new impulse response(s), from which the second, the thirdm the fourth etc. signal component(s) can be estimated by equation (1).

Instead of the signal, also the interference or both of them can be obtained, as will be described in the following.

Figure 5 is a graph of impulse response versus excess delay with some settings shown on the left hand side. SIC principle can also be applied to the interfering signal, and the interfering signal can be approximated by

$$i(t,\tau) = \sum_{i=1}^{N'} A_i' e^{j2\pi v_i' t} u'(t - \tau_i') \qquad (2)$$

where A' refers to the amplitude of the interference signal, the exponent exp' to the phase of the interference signal and u' to the form of the transmitted interference signal. The parameters (A, tau, nu) can be taken from the measured interference data. In it the strongest peak is measured and/or detected and the signal can be reconstructed according the equation (1).

The above examples are only two examples of the equations. The basic idea is that complex samples may and can be modeled.

Both the signal and the interference SIC may be performed at least partly in parallel or in cascade to the signal estimation. The iterative process can be processed as described previously. The structure of the parallel SIC can be seen in Figure 6.

Figure 6 is a block diagram of the invention and its embodiments showing the structure of one parallel SIC structure. The Figure shows two parallel paths, but it can comprise two or more SIC elements 6-100, 6-200 of Figure 5 with the matched filters 6-8A, 6-8B, the signal regeneration units 6-12A, 6-12B and the subtraction elements 6-16A, 6-16B. The incoming signal "r" is fed to the input of the matched filters, their outputs "ir" are fed to the signal regeneration unit 6-12A and to the interference regeneration unit 6-12B correspondingly and the outputs "s" and "i" respectively are fed to the subtraction elements. Feedback signals "r-s" and "r-i" from the subtraction elements can be fed back to the matched filters. The idea of this structure is to have separate impulse response representations for the signal and the interference of the signal. Thus it is possible to use separate channels or the same channel to emulate radio environment or different radio environments. In addition to simpleness, this structure is efficient because it saves the burden to emulate interference in play backing the residual signal. In other words, a similar or almost a similar model for the interference is established and/or used, which interference is from a signal e.g. from a neighborhood system or a neighborhood cell as it is now possible to formulate the radio channel characteristics out from that this can be as shown in the equation 2 or some other equation describing the interference and thus an impulse response corresponding to the interference can be established, and the impulse response can be emulated like the signal is emulated.

The interference may be in different frequency range than the signal or two or more different frequency range interference signals can be simulated, if necessary, as it is possible to have two or more separate matched filters where each filter can have its own operational frequency or frequency range. The selection of the signal form is usually decided by the frequency allocation. In other words, the interferences may be two adjacent systems in frequency. Typically frequencies can be reused in network architecture, and different cells can use different frequencies. The interference can also be in a different frequency. The equation 2, which describes the interference, is in this example in another frequency than the signal. It is also possibly to have several matched filters in parallel to obtain the filter bank. Thus different combinations of parallel and serial filters, regeneration units, subtraction units and SIC elements are possible and in each case the implementation can be tailored for the specific application.

With the invention and its embodiments several separate emulation files for HW (hardware) emulation can be generated, which files may be emulated separately or they may be combined into one single emulation file.

The invention and its embodiments describe the method and the algorithm to extract the signal and interference, the signal components and the interference components, from the signal and channel measurements and formulation of the corresponding emulation method. In other words, they describe the method and the algorithm how to iteratively form the signal and interference estimates from the received data samples. The interference space and signal space can now be separated. The intention is to sample I and Q samples into the hard disk from which they are processed by software SW and to emulate and play back the network level measurement data. The idea is that the signal is detected from the impulse response one by one, a component by a component, like in the SIC algorithm. In one example, the signal is obtained from the equation 1 and the interference is obtained from the equation 2.

From the residual signal a signal model can be formed for the interference. In this second process an impulse response is formed for the first interference component, which is then regenerated and subtracted and again filtered, reconstructed and subtracted. This can be continued until the energy of the signal and/or the interference is end or below a predetermined level or until only noise can be found or until a triggering event or a condition. A first process can be for the signal and the second process can be for the interference or vice versa. Alternatively, these processes can be simultaneous. In yet another alternative the signal or the interference with two different frequencies, phases, polarization etc. can be formed.

In the invention and its embodiments first the signal is tried to find out. E.g. when the WiMax network or WiMax communication or a communication, which comprises WiMax communication or a mixed communication which also comprises WiMax communication is measured, the WiMax signal is first tried to found out. This is because the WiMax signal is known. The matched filtering is done for this type of signal or communication and what is left may be interpreted as interference, which may then be further examiner or detected.

If the communication also comprises some other specific type or known communication or communication, which is known a priori that type of communication can also be tried to find out either before WiMax communication or after it. In other words, the total communication can comprise a first type of communication and a second type of communication, which may be detected simultaneously or in parallel and only after that the interference may be detected.

The signal and the interference may also be interleaved e.g. such that the first component is the (e.g. the first) WiMax component, the second component is the (e.g. the first) interference component, then comes the second WiMax component, the second interference component, the third WiMax component, the fourth WiMax component, the third interference component etc.

It is to be noted that WiMax communication is to be interpreted as an example and not the only type of communication.

When processing the whole communication, first the total communication comprising the signal and the interference can be stored in a memory or a database and then the (known) signal can be detected or obtained and after that the interference can be detected or obtained. The total communication or part of it or the signal or the interference can be stored and retrieved e.g. for the measurement, calculation, detection and process purposes in one or more phases. In one embodiment first the total communication is stored and then the signal is stored, when it is found out.

The estimate of the interference is processed in the receiver. It may be processed e.g. after the FFT blocks. The IFFT of the frequency is an impulse response. Thus its impulse response e.g. in OFDM system has to be calculated in some phase, but latest in synchronization.

In the invention and its embodiments a system for creating dummy data, modulating said data and inserting said data to a communications signal is also provided. The interference is thus used as the signal. Because in cellular and equivalent networks the most severe interference sources can be known a priori, the matched filters can specially be designed for them. The output of the matched filter is an impulse response.

If the interference sources cannot be known a priori filter banks may be used to estimate the interference (e.g. as a blind estimation) or a general estimate of a noise rise can be processed or done and/or the noise rise can be synthetically generated.

A computer program comprising program code means adapted to perform any necessary steps, when the program is run on a processor can implement the invention and its embodiments. These steps can comprise e.g. receiving a signal; filtering the signal with a matched filter; detecting an impulse response from the filtered signal; applying parameters from the detected impulse response to a reconstruction equation; reconstructing the received signal according to the reconstruction equation; and subtracting the reconstructed signal from the input signal for obtaining a first residual signal.

It also is possible to have a computer program product comprising program code means stored in a computer readable medium, the program code means being adapted to perform any of said steps, when the program is run on a computer or on a processor.

All modifications and configurations required for implementing functionality of the embodiments may be performed as routines, which may be implemented as added or updated software routines, application circuits ASIC and/or programmable circuits. Software routines, also called program products, including applets and macros, can be stored in any apparatus-readable data storage medium and they include program instructions to perform particular tasks. Software routines may be downloaded into an apparatus. The apparatus, such as controllers, or corresponding server components, or a user terminal may be configured as a computer including at least a memory for providing storage area used for arithmetic operation and an operation processor for executing the arithmetic operation. An example of the operation processor includes a central processing unit. The memory may be removable memory detachably connected to the apparatus.

The invention and its embodiments provide as effective measurement and emulation system as possible. One possibility is to apply a Serial Interference Cancellation method into the signal and interference processing. It is also possible to formulate the signal from the impulse response and replay the interference as the residual signal. One possibility is to combine the serial interference cancellation method with the method of replaying the residual signal.

This invention can be applied in many different test environments, e.g. in a so-called virtual drive test environment. This means that in virtual drive test the field tests are done in a laboratory as accurately as possible The interference may be simulated with less HW resources than in case of the replaying the residual signal.

The invention and its embodiments provide many advantages. E.g. the interference profile may now be based on the measurements and not on the guess such as in prior art synthetic cases, enabling the full realism. Furthermore, the complexity of test setup becomes less critical than in direct playback modes. An advantage of the method and arrangement of the invention is simpler structure and fast and accurate functioning of the emulator. This also makes the quality of communication better. Now the interference may also be repeatable and correct. Less hardware resources is also needed than in conventional solutions.

It will be obvious to a person skilled in the art that, as the technology advances, the inventive concept can be implemented in various ways. The invention and its embodiments are not limited to the examples described above but may vary within the scope of the claims.

## Claims

1. A method for emulation of signals by extracting a signal and an interference from communication measurements, comprising:

   receiving (4-2) and storing a communication comprising the signal and the interference;
   feeding (4-3) the received communication through a filter (4-8) for detecting a strongest impulse response peak (3-2, 3-4, 3-6, 3-8, 3-10, 3-12) of a plurality of impulse response peaks corresponding to a plurality of respective paths in the filtered signal or in the filtered interference and for providing the strongest impulse response peak as an output from the filter;
   feeding the output from the filter to a regenerator (4-12) for reconstructing a path of the signal or of the interference according to a reconstruction equation using the strongest impulse response peak;
   feeding an output from the regenerator to a subtractor (4-16) for obtaining a residual signal component or a residual interference component from the communication;
   feeding the residual signal component or the residual interference component again through the same filter (4-8), the same regenerator (4-12), and the same subtractor (4-16) for obtaining a next residual signal component or a next residual interference component from the communication until a whole signal or a whole interference is reconstructed from the reconstructed paths; and
   using the reconstructed whole signal and/or the reconstructed whole interference for emulation in a test environment.

2. A method according to claim 1, comprising obtaining the residual signal components or the residual interference components from the received communication in series or in parallel.

3. A method according to claims 1 or 2, comprising obtaining further residual signal components and/or further residual interference components by means of the same filter, regenerator and subtractor.

4. A method according to any one of claims 1 to 3, wherein the reconstructed input signal fulfills the following equation:

$$s(t, \tau) = \sum_{i=1}^{N} A_i e^{j2p\mu t} u(t - \tau)$$

wherein $A_i$ refers to the amplitude of the signal, exp refers to the phase of the signal and u refers to the transmitted signal form, and wherein the parameters tau and nu are taken from the measured data, and wherein N indicates how far the index i runs.

5. A method according to any one of claims 1 to 4, wherein the reconstructed interference signal fulfills the following equation:

$$i(t, t') = \sum_{i=1}^{N} A_i' e^{j2pu't} u'(t - t')$$

where $A_i'$ refers to the amplitude of the interference signal, exp' to the phase of the interference signal and u' refers to the form of the transmitted interference signal, and wherein the parameters tau' and nu' are taken from the measured data, and wherein N indicates how far the index i runs.

6. A device for emulation of signals by extracting a signal and interference from communication measurements, the device comprising:

receiving and storing means configured to receive and store a communication (4-2) comprising the signal and the interference;
a filter (4-8) for detecting, in the received communication, a strongest impulse response peak (3-2, 3-4, 3-6, 3-8, 3-10, 3-12 ) of a plurality of impulse response peaks corresponding to a plurality of respective paths in the filtered signal or in the filtered interference and providing the strongest impulse response peak as an output from the filter;
a regenerator (4-12) for reconstructing a path of the signal or of the interference according to a reconstruction equation using the strongest impulse response peak output from the filter;
a subtractor (4-16) for obtaining a residual signal component or a residual interference component from the communication using an output from the regenerator;
the device being configured to feed the residual signal component or the residual interference component again through the same filter (4-8), the same regenerator (4-12), and the same subtractor (4-16) for obtaining a next residual signal component or a next residual interference component from the communication until a whole signal or a whole interference is reconstructed from the reconstructed paths; and
the device being configured to use the reconstructed whole signal and/or the reconstructed whole interference for emulation in a test environment.

7. A non-transitory computer-readable medium comprising instructions encoded thereon that, when executed by a computing device, cause the computing device to perform a method according to any of claims 1 to 5.

**Patentansprüche**

1. Verfahren zur Emulation von Signalen durch Extrahieren eines Signals und einer Störung aus Kommunikationsmessungen, umfassend:

Empfangen (4-2) und Speichern einer Kommunikation umfassend das Signal und die Störung;
Transportieren (4-3) der empfangenen Kommunikation durch einen Filter (4-8) zur Ermittlung der stärksten Impulsantwortspitze (3-2, 3-4, 3-6, 3-8, 3-10, 3-12) aus einer Vielzahl von Impulsantwortspitzen entsprechend einer Vielzahl von entsprechenden Pfaden in dem gefilterten Signal oder in der gefilterten Störung und zur Bereitstellung der stärksten Impulsantwortspitze als Ausgabe vom Filter;
Transportieren der Ausgabe vom Filter an einen Regenerator (4-12) zur Rekonstruktion eines Pfades des Signals oder der Störung gemäß einer Rekonstruktionsgleichung unter Verwendung der stärksten Impulsantwortspitze;
Transportieren einer Ausgabe vom Regenerator an einen Subtrahierer (4-16) zur Gewinnung einer Restsignalkomponente oder einer Reststörkomponente aus der Kommunikation;
Transportieren der Restsignalkomponente oder Reststörkomponente wieder durch denselben Filter (4-8), denselben Regenerator (4-12) und denselben Subtrahierer (4-16) zur Gewinnung einer nächsten Restsignalkomponente oder einer nächsten Reststörkomponente aus der Kommunikation, bis ein ganzes Signal oder eine ganze Störung aus den rekonstruierten Pfaden rekonstruiert wurde; und
Verwenden des rekonstruierten ganzen Signals und/oder der rekonstruierten ganzen Störung zur Emulation in einer Testumgebung.

2. Verfahren nach Anspruch 1, umfassend die Gewinnung der Restsignalkomponenten oder der Reststörkomponenten aus der erhaltenen Kommunikation seriell oder parallel.

3. Verfahren nach Anspruch 1 oder 2, umfassend die Gewinnung weiterer Restsignalkomponenten und/oder weiterer Reststörkomponenten mithilfe desselben Filters, Regenerators oder Subtrahierers.

4. Verfahren nach einem der Ansprüche 1 bis 3, wobei das rekonstruierte Eingangssignal folgende Gleichung erfüllt:

$$s(t,\tau) = \sum_{i=1}^{N} A_i e^{j2p\upsilon t} u(t - \tau)$$

wobei $A_i$ sich auf die Amplitude des Signals bezieht, exp sich auf die Phase des Signals bezieht und u sich auf die übertragene Signalform bezieht, und wobei die Parameter tau und nu von den gemessenen Daten stammen, und wobei N angibt, wie weit der Index i läuft.

5. Verfahren nach einem der Ansprüche 1 bis 4, wobei das rekonstruierte Störsignal folgende Gleichung verfüllt:

$$i(t,\tau) = \sum_{i=1}^{N} A_i' e^{j2p\upsilon' t} u'(t - t')$$

wobei $A_i'$ sich auf die Amplitude des Störsignals bezieht, exp' sich auf die Phase des Störsignals bezieht und u' sich auf die Form des übertragenen Störsignals bezieht, und wobei die Parameter tau' und nu' von den gemessenen Daten stammen, und wobei N angibt, wie weit der Index i läuft.

6. Gerät zur Emulation von Signalen durch Extrahieren eines Signals und einer Störung aus Kommunikationsmessungen, wobei das Gerät folgendes umfasst:

Empfangs- und Speicherhilfsmittel, die zum Empfangen und Speichern einer Kommunikation (4-2) umfassend das Signal und die Störung konfiguriert sind;
einen Filter (4-8) zum Feststellen einer stärksten Impulsantwortspitze (3-2, 3-4, 3-6, 3-8, 3-10, 3-12) in der empfangenen Kommunikation aus einer Vielzahl von Impulsantwortspitzen entsprechend einer Vielzahl von entsprechenden Pfaden in dem gefilterten Signal oder in der gefilterten Störung und zur Bereitstellung der stärksten Impulsantwortspitze als eine Ausgabe vom Filter;
einen Regenerator (4-12) zur Rekonstruktion eines Pfades des Signals oder der Störung gemäß einer Rekonstruktionsgleichung unter Verwendung der stärksten Impulsantwortspitzenausgabe vom Filter;
einen Subtrahierer (4-16) zur Gewinnung einer Restsignalkomponente oder einer Reststörkomponente aus der Kommunikation mithilfe einer Ausgabe von dem Regenerator;
wobei das Gerät so konfiguriert ist, dass es die Restsignalkomponente oder Reststörkomponente wieder durch denselben Filter (4-8), denselben Regenerator (4-12) und denselben Subtrahierer (4-16) zur Gewinnung einer nächsten Restsignalkomponente oder einer nächsten Reststörkomponente aus der Kommunikation transportiert, bis ein ganzes Signal oder eine ganze Störung aus den rekonstruierten Pfaden rekonstruiert wurde; und wobei das Gerät so konfiguriert ist, dass es das rekonstruierte ganze Signal und/oder die rekonstruierte ganze Störung zur Emulation in einer Testumgebung verwendet.

7. Nicht flüchtiges, computerlesbares Medium umfassend darauf verschlüsselte Anweisungen, die bei Ausführung auf einem EDV-Gerät das EDV-Gerät anstoßen, ein Verfahren nach einem der Ansprüche 1 bis 5 durchzuführen.

**Revendications**

1. Procédé d'émulation de signaux par extraction d'un signal et d'une interférence de mesures de communications, comprenant :

la réception (4-2) et le stockage d'une communication comprenant le signal et l'interférence ;

l'introduction (4-3) de la communication reçue à travers un filtre (4-8) pour détecter un pic maximal de réponse aux impulsions (3-2, 3-4, 3-6, 3-8, 3-10, 3-12) d'une pluralité de pics de réponse aux impulsions correspondant à une pluralité de voies respectives dans le signal filtré ou dans l'interférence filtrée et pour fournir le pic maximal de réponse aux impulsions sous forme d'une sortie issue du filtre ;

l'introduction de la sortie du filtre à un régénérateur (4-12) pour reconstruire une voie du signal ou de l'interférence selon une équation de reconstruction utilisant le pic maximal de réponse à l'impulsion ;

l'introduction d'une sortie du régénérateur à un soustracteur (4-16) pour obtenir une composante de signal résiduel ou une composante d'interférence résiduelle depuis la communication ;

l'introduction de la composante de signal résiduel ou la composante d'interférence résiduelle de nouveau à travers le même filtre (4-8), le même régénérateur (4-12) et le même soustracteur (4-16) pour obtenir une composante de signal résiduel suivante ou une composante d'interférence résiduelle suivante à partir de la communication jusqu'à ce qu'un même signal ou une interférence entière soit reconstruite depuis les voies reconstruites ; et

l'utilisation du signal entier reconstruit et/ou de l'interférence entière reconstruite pour une émulation dans un environnement d'essai.

2.  Procédé selon la revendication 1, comprenant l'obtention des composantes de signal résiduel ou des composantes d'interférence résiduelle depuis la communication reçue en série ou en parallèle.

3.  Procédé selon la revendication 1 ou 2, comprenant l'obtention d'autres composantes de signal résiduel et/ou des composantes d'interférence résiduelle au moyen du même filtre, du même régénérateur et du même soustracteur.

4.  Procédé selon l'une quelconque des revendications 1 à 3, dans lequel le signal d'entrée construit répond à l'équation suivante :

$$s(t,t) = \sum_{i=1}^{N} A_i e^{j2put} u(t - t)$$

où $A_i$ correspond à l'amplitude du signal, exp à la phase du signal et u à la forme du signal transmis, et où les paramètres tau et nu sont prélevés depuis les données mesurées, et où N indique où l'index i se situe.

5.  Procédé selon l'une quelconque des revendications 1 à 4, dans lequel le signal d'entrée construit répond à l'équation suivante :

$$i(t,t) = \sum_{i=1}^{N} A_i' e^{j2pu't} u'(t - t')$$

où $A_i'$ correspond à l'amplitude du signal d'interférence, exp' à la phase du signal d'interférence et où u' correspond à la forme du signal d'interférence transmis, et où les paramètres tau' et nu' sont prélevés depuis les données mesurées, et où N indique où l'index i se situe.

6.  Procédé d'émulation de signaux par extraction d'un signal et d'une interférence de mesures de communications, le dispositif comprenant :

la réception et le stockage de moyens conçus pour recevoir et pour stocker une communication (4-2) comprenant le signal et l'interférence ;

un filtre (4-8) servant à détecter, dans la communication reçue, un pic maximal de réponse aux impulsions (3-2, 3-4, 3-6, 3-8, 3-10, 3-12) d'une pluralité de pics de réponse aux impulsions correspondant à une pluralité de voies respectives dans le signal filtré ou dans l'interférence filtrée et pour fournir le pic maximal de réponse aux impulsions sous forme d'une sortie issue du filtre ;

un régénérateur (4-12) servant à reconstruire une voie du signal ou de l'interférence selon une équation de reconstruction utilisant le pic maximal de réponse à l'impulsion depuis le filtre ;

un soustracteur (4-16) servant à obtenir une composante de signal résiduel ou une composante d'interférence résiduelle depuis la communication à partir d'une sortie issue du régénérateur ;

le dispositif étant conçu pour introduire la composante de signal résiduel ou la composante d'interférence résiduelle de nouveau à travers le même filtre (4-8), le même régénérateur (4-12) et le même soustracteur (4-16) pour obtenir une composante de signal résiduel suivante ou une composante d'interférence résiduelle suivante à partir de la communication jusqu'à ce qu'un même signal ou une interférence entière soit reconstruite depuis les voies reconstruites ; et

le dispositif étant conçu pour utiliser le signal entier reconstruit et/ou de l'interférence entière reconstruite pour une émulation dans un environnement d'essai.

7. Support non transitoire lisible par ordinateur comprenant des instructions codées sur celui-ci qui, quand elles sont exécutées par un dispositif informatique, amènent le dispositif informatique à effectuer un procédé selon l'une quelconque des revendications 1 à 5.

Fig. 1

Fig. 2

Impulse Response vs. Excess Delay

Fig. 3

Impulse Response vs. Excess Delay

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030174794 A1
- EP 1753151 A2

- US 6574204 B